# EUROPÄISCHE PATENTSCHRIFT

(11) **EP 1 304 281 B1**
(45) Veröffentlichungstag und Bekanntmachung des Hinweises auf die Patenterteilung: **21.06.2006**
(21) Anmeldenummer: 02017883.6
(22) Anmeldetag: 09.08.2002
(51) Int. Cl.: B62D 25/20

(54) **Fahrzeug mit einer im Längschweller eines Fahrzeugaufbaus angeordneten Verstärkung**
Vehicle with a reinforcing insert in the sill beam
Véhicule ayant un longeron lateral muni d'un insert de renforcement

(30) Priorität: 19.10.2001 DE 10151768
(43) Veröffentlichungstag der Anmeldung: 23.04.2003
(73) Patentinhaber: Dr.Ing. h.c.F. Porsche Aktiengesellschaft, 70435 Stuttgart (DE)
(72) Erfinder: Polzer, Patrick, 75417 Mühlacker (DE); Rüdiger, Jahn, 71229 Leonberg (DE)

(56) Entgegenhaltungen:
- DE-A- 19 954 292
- US-A- 5 544 930

## Beschreibung

Die Erfindung bezieht sich auf ein Fahrzeug mit einer im Längsschweller eines Fahrzeugaufbaus angeordneten Verstärkung nach dem Oberbegriff des Patentanspruchs 1.

Aus der DE 199 54 292 A1 ist ein Verstärkungsrohr in einem Längsschweller eines Fahrzeugs bekannt, das über die Fahrzeugsäulen mit dem Fahrzeugaufbau verbunden ist. Ein solches Verstärkungsrohr wird in einem ersten Schritt an den äußeren Fahrzeugsäulen A und C befestigt und danach in einem zweiten Schritt erfolgt eine Befestigung an der mittleren B-Säule. Aufgrund von Toleranzen und auch durch Wärmespannungen kann das Verstärkungsrohr unter Umständen eine von seiner Längsachse abweichende Form aufweisen, das heißt, das Verstärkungsrohr ist mit einer sogenannten Beulung in irgendeiner Richtung versehen.

Aufgabe der Erfindung ist es, eine Befestigung des Verstärkungsrohres an der mittleren B-Säule in der Weise zu schaffen, wodurch das Verstärkungsrohr auch bei einer von seiner Längsachse abweichenden Form ohne Verformung der Fahrzeugaufbaustruktur befestigbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten bestehen darin, daß auch bei einem gebogenen bzw. ausgebeulten Verstärkungsrohr eine Befestigung an der B-Säule des Fahrzeugaufbaus möglich ist, ohne daß eine Verformung dieser B-Säule erfolgt, was bei einer Beulung des Verstärkungsrohrs nach außen hin erfolgt. Um eine feste und Verformungen an der B-Säule vermeidende Befestigung des Verstärkungsrohres zu gewährleisten, ist nach der Erfindung vorgesehen, daß die mittlere Befestigungskonsole unter Zwischenschaltung von Ausgleichselementen am Verstärkungsrohr befestigbar ist, wozu die Ausgleichselemente vorragende Befestigungslappen aufweisen, welche mit der Befestigungssole verbindbar sind.

Insbesondere bestehen die Ausgleichselemente aus der der Befestigungskonsole zugerichteten Halbschalen, die am Verstärkungsrohr angeschweißt befestigt sind und die Befestigungslappen aus der Ebene der Halbschalen rechtwinklig abgestellt sind. Die Befestigungslappen sind jeweils am äußeren Rand halbkreisförmig umlaufend ausgeführt und die weiteren Befestigungslappen sind am inneren Rand jeweils nur abschnittsweise vorgesehen. Durch diese Befestigungslappen an den Ausgleichselementen können Toleranzen am Verstärkungsrohr hervorgerufen durch eine von der Längsachse abweichende Form des Verstärkungsrohres aufgefangen werden. Das heißt, die Befestigungskonsole kann spannungsfrei mit der B-Säule verbunden werden.

Die Befestigungskonsole ist im zusammengebauten Zustand zwischen den halbkreisförmig umlaufenden Befestigungslappen der Ausgleichselemente angeordnet und die weiteren abschnittsweise vorgesehenen innenliegenden Befestigungslappen durchragen Schlitze der Befestigungskonsole. Hierdurch wird in vorteilhafter Weise die Befestigungskonsole positioniert in Lage zur Säule gehalten und eine Verbindung mit den Ausgleichselementen durch ein Verschweißen ist in einfacher Weise möglich.

Durch die mit den Befestigungslappen versehenen Ausgleichselemente kann ein mit Toleranzen behaftetes Verstärkungsrohr, egal in welche Richtung eine Beulung auftritt, ausgeglichen werden, da die Befestigungskonsole in jedem Fall mit einem radialen Spiel zwischen den äußeren und inneren Befestigungslappen sitzt. Hiermit ist die Befestigungskonsole zu den Ausgleichselementen in Abhängigkeit von der befestigen Lage des Verstärkungsrohres an den Säulen A und C des Fahrzeugs derart angeordnet, daß ein von einer Längsachse abweichendes Verstärkungsrohr an der B-Säule des Fahrzeugs über die zu den Ausgleichselementen beabstandeten Befestigungskonsole befestigbar ist.

Ein Ausführungsbeispiel der Erfindung ist in den Zeichnungen dargestellt und wird im folgenden näher beschrieben.
Es zeigen:
- Fig. 1: eine schaubildliche Darstellung eines Verstärkungsrohres mit endseitigen Befestigungskonsolen für eine A- und C-Säule und eine mittlere Befestigungskonsole mit zwischengeschaltetem Ausgleichselement für eine B-Säule,
- Fig. 2: eine vergrößerte schaubildliche Darstellung der aus Halbschalen bestehenden Ausgleichselemente,

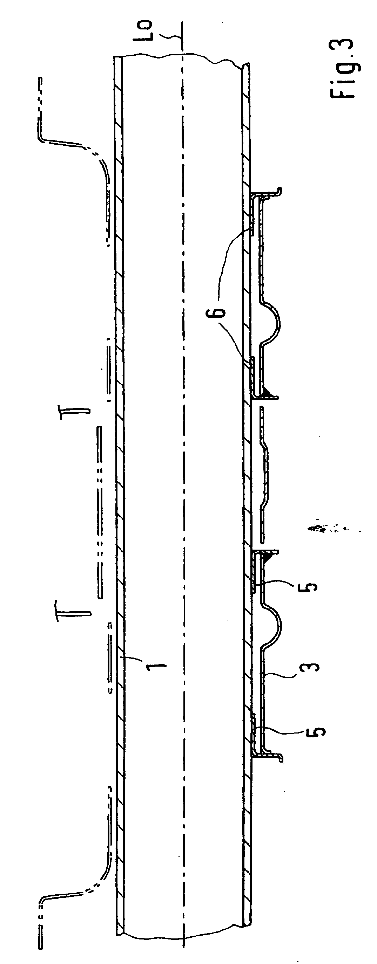

- Fig. 3: einen Horizontalschnitt durch das Verstärkungsrohr mit Befestigungskonsole und Ausgleichselementen,
- Fig. 4: einen Vertikalschnitt durch das Verstärkungsrohr mit Ausgleichselementen und Befestigungskonsole und
- Fig. 5: eine schaubildliche Darstellung der auf Befestigungslappen des Ausgleichselements aufgesetzten Befestigungskonsole.

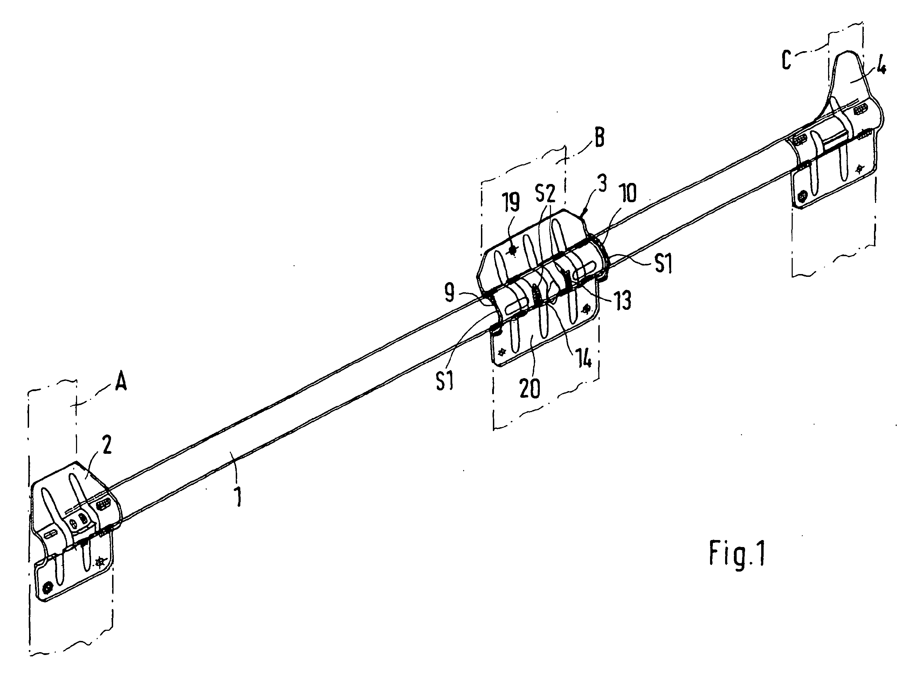

Ein Verstärkungsrohr 1 ist im Längsschweller Ls eines Fahrzeugs zur Crashaufnahme angeordnet und wird hierzu an einer A-, B- und C-Säule im Fahrzeugaufbau befestigt. In Fig. 1 sind diese Säulen A, B und C schematisch angedeutet.

Zur Verbindung mit diesen Fahrzeugsäulen A, B und C sind jeweils Befestigungskonsolen 2, 3 und 4 vorgesehen, die entweder unmittelbar oder unter Zwischenschaltung eines oder mehrere nebeneinanderliegenden Ausgleichselementen 5, 6 mit der Fahrzeugsäule B verbindbar sind.

In dem gezeigten Ausführungsbeispiel sind die Befestigungskonsolen 2 und 4 an den freien Enden des Verstärkungsrohres 1 unmittelbar durch Schweißungen mit der Säule A und C verbunden. Die mittlere Befestigungskonsole 3 ist mittelbar unter Zwischenschaltung von Ausgleichselementen 5 und 6 an der B-Säule befestigt.

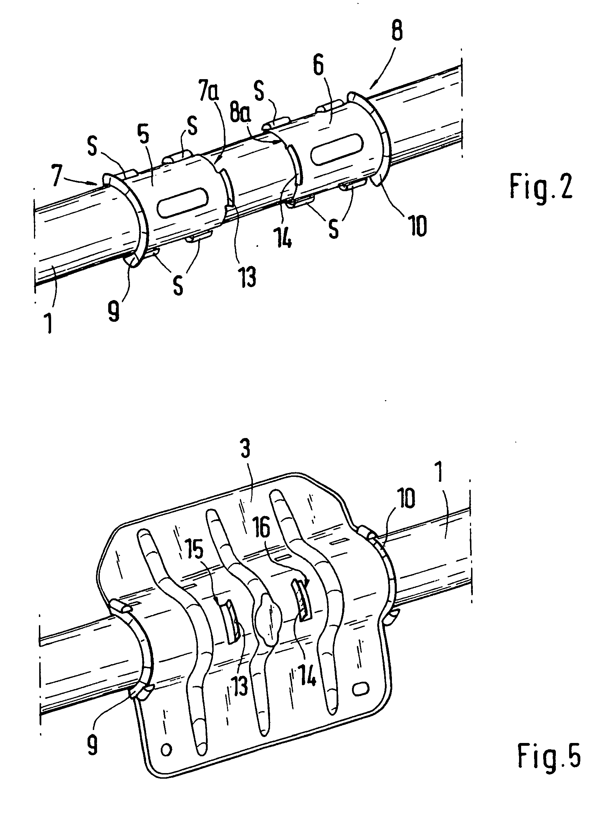

Wie in Fig. 2 unter anderem näher gezeigt, bestehen die Ausgleichselemente 5, 6 aus Halbschalen, die der Befestigungskonsole 3 zugerichtet sind. Die Ausgleichselement 5, 6 sind jeweils über mehrere Schweißungen S mit dem Verstärkungsrohr 1 fest verbunden. Auf diese Ausgleichselemente 5, 6 wird die Befestigungskonsole 3 aufgesetzt, positioniert und durch Schweißungen S1 und S2 befestigt. Hierzu weisen die Ausgleichselemente 5, 6 am außenliegenden Rand 7, 8 jeweils vorragende bzw. abgestellte Befestigungslappen 9, 10 und am innenliegenden Rand 11, 12 jeweils weitere abgestellte Befestigungslappen 13, 14 auf, die nur abschnittsweise vorgesehen sein können.

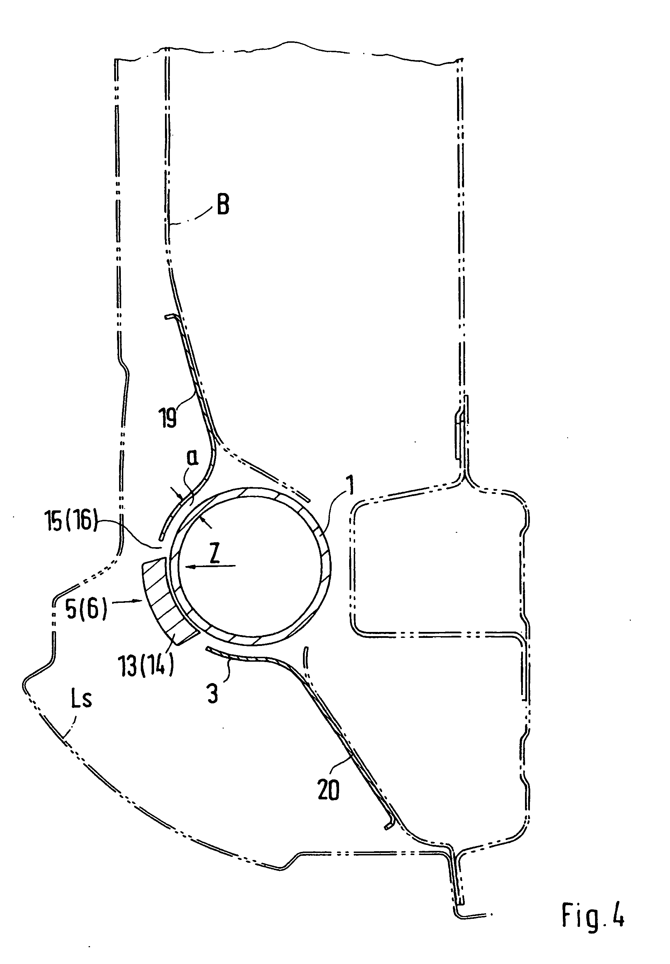

Wie in Fig. 1 in Verbindung mit den Fig. 4 und 5 näher gezeigt, ist die Befestigungskonsole 3 zwischen den außenliegenden Befestigungslappen 9 und 10 angeordnet, wogegen die innenliegenden Befestigungslappen 13, 14 durch Schlitze 15, 16 in der Befestigungskonsole 3 ragen. Eine Befestigung dieser Konsole 3 an den Ausgleichselementen 5, 6 erfolgt über ein Verschweißen (S1 und S2) der Befestigungslappen 9, 10 und 13, 14 mit der Befestigungskonsole 3, was in Fig. 1 und in Fig. 5 näher gezeigt ist.

Die Verbindung des Verstärkungsrohres 1 mit den Fahrzeugsäulen A, B und C erfolgt in der Weise, daß zuerst eine Befestigung des Verstärkungsrohres 1 über die mit dem Rohr 1 verbundenen Befestigungskonsolen 2 und 4 mit den Säulen A und C erfolgt. Da sich das Verstärkungsrohr 1 aufgrund von Wärmespannungen verformen kann bzw. das Verstärkungsrohr 1 schon im angelieferten Zustand eine Verformung in Längsrichtung bzw. zur Längsachse Lo aufweist, werden zum Ausgleich dieser Abweichungen die Ausgleichselemente 5 und 6 aufgesetzt und mit dem Rohr 1 verbunden. Wenn das Rohr 1 beispielsweise eine Beulung in Z-Richtung (Fig. 4) aufweist, kann im Normalfall ohne Ausgleichselemente 5, 6 keine Verbindung mit der B-Säule stattfinden; es sei denn diese wird unsachgemäß verformt. Um dieses Abweichmaß durch eine Beulung des Rohres 1 aufzufangen, kann die Befestigungskonsole 3 auf die Ausgleichselemente 5, 6 aufgesetzt und mittels der Befestigungslappen 9, 10 und 13, 14 mit dem Rohr 1 unter Aufnahme der Toleranzen verbunden werden. Die Verbindung der Befestigungskonsole 3 mit der B-Säule erfolgt unmittelbar über die Schenkel 19 und 20 der Befestigungskonsole 3.

## Patentansprüche

1. Fahrzeug mit einer im Längsschweller eines Fahrzeugaufbaus angeordneten Verstärkung, die aus einem Rohrelement besteht, das über endseitige und eine mittlere Befestigungskonsole mit den Säulen des Fahrzeugs verbindbar ist, **dadurch gekennzeichnet, daß** die mittlere Befestigungskonsole (3) unter Zwischenschaltung von Ausgleichselementen (5, 6) am Verstärkungsrohr (1) befestigbar ist, wozu die Ausgleichselemente (5, 6) vorragend abgestellte Befestigungslappen (9, 10 und 13, 14) aufweisen, welche mit der Befestigungskonsole (3) verbindbar sind.

2. Fahrzeug nach Anspruch 1, **dadurch gekennzeichnet, daß** die Ausgleichselemente (5, 6) aus der der Befestigungskonsole (3) zugerichteten Halbschalen bestehen, die am Verstärkungsrohr (1) angeschweißt befestigbar sind und die Befestigungslappen (9, 10 und 13, 14) aus der Ebene der Halbschalen rechtwinklig abgestellt sind.

3. Fahrzeug nach den Ansprüchen 1 oder 2, **dadurch gekennzeichnet, daß** die Befestigungslappen (9, 10) jeweils am äußeren Rand (7, 8) halbkreisförmig umlaufend ausgeführt sind und die weiteren Befestigungslappen (13, 14) am inneren Rand (7a, 8a) jeweils nur abschnittsweise verlaufen.

4. Fahrzeug nach den Ansprüchen 1, 2 oder 3, **dadurch gekennzeichnet, daß** die Befestigungskonsole (3) im zusammengebauten Zustand zwischen den halbkreisförmig umlaufenden Befestigungslappen (9, 10) der Ausgleichselemente (5, 6) angeordnet ist und die weiteren abschnittsweise vorgesehenen innenliegenden Befestigungslappen (13, 14) durchragend in Schlitzen (15, 16) der Befestigungskonsole (3) angeordnet sind.

5. Fahrzeug nach einem oder mehreren der vorhergehenden Ansprüche, **dadurch gekennzeichnet, daß** die Befestigungskonsole (3) zu den Ausgleichselementen (5, 6) in Abhängigkeit von der befestigten Lage des Verstärkungsrohres (1) an den Säulen (A und B) des Fahrzeugs derart angeordnet ist, daß ein von einer Längsachse (L0) abweichendes Verstärkungsrohr (1) an der B-Säule des Fahrzeugaufbaus über die zu den Ausgleichselementen (5, 6) mit dem Maß (a) beabstandete Befestigungskonsole (3) befestigbar ist.

## Claims

1. A vehicle with a reinforcement arranged in the longitudinal sill of a vehicle body, said reinforcement comprising a tubular member which is connectable to the pillars of the vehicle by means of end fastening brackets and a middle fastening bracket, **characterised in that** the middle fastening bracket (3) is fixable to the reinforcing tube (1) with the interposition of compensating members (5, 6), for which purpose the compensating members (5, 6) have projecting fastening flanges (9, 10 and 13, 14) which are connectable to the fastening bracket (13).

2. A vehicle according to claim 1, **characterised in that** the compensating members (5, 6) comprise half-shells which face the fastening bracket (3) and are weldable to the reinforcing tube (1), and the fastening flanges (9, 10 and 13, 14) are bent at right angles out of the plane of the half-shells.

3. A vehicle according to claim 1 or claim 2, **characterised in that** the fastening flanges (9, 10) are each formed so as to extend in a semicircular manner at the outer edge (7, 8), and the further fastening flanges (13, 14) each only extend over part of the inner edge (7a, 8a).

4. A vehicle according to claim 1, 2 or 3, **characterised in that**, in the assembled state, the fastening bracket (3) is arranged between the semi-circularly extending fastening flanges (9, 10) of the compensating members (5, 6), and the further, partially provided, inner fastening flanges (13, 14) are arranged so as to project through slots (15, 16) in the fastening bracket (3).

5. A vehicle according to one or more of the preceding claims, **characterised in that**, in dependence upon the fastened position of the reinforcing tube (1) on the pillars (A and B) of the vehicle, the fastening bracket (3) is arranged in relation to the compensating members (5, 6) in such a way that a reinforcing tube (1) deviating from a longitudinal axis (LO) is fixable to the B-pillar of the vehicle body by means of the fastening bracket (3), which is spaced apart from the compensating members (5, 6) by the amount (a).

## Revendications

1. Véhicule avec un renforcement disposé dans le longeron d'une carrosserie de véhicule, lequel renforcement est constitué d'un élément tubulaire qui peut être relié aux montants du véhicule par l'intermédiaire de consoles de fixation d'extrémités et d'une console de fixation centrale, **caractérisé en ce que** la console de fixation centrale (3) peut être fixée au tube de renforcement (1) en intercalant des éléments compensateurs (5, 6), les éléments compensateurs (5, 6) comportant pour cela des languettes de fixation faisant saillie (9, 10 et 13, 14) qui peuvent être reliées à la console de fixation (3).

2. Véhicule selon la revendication 1, **caractérisé en ce que** les éléments compensateurs (5, 6) sont constitués par les demi-coquilles dirigées vers la console de fixation (3) qui peuvent être fixées par soudure au tube de renforcement (1) et les languettes de fixation (9, 10 et 13, 14) sont décalées à angle droit par rapport au plan des demi-coquilles.

3. Véhicule selon les revendications 1 ou 2, **caractérisé en ce que** les languettes de fixation (9, 10) ont une configuration semi-circulaire sur le bord extérieur (7, 8) et les autres languettes de fixation (13, 14) s'étendent seulement par tronçons sur le bord intérieur (7a, 8a).

4. Véhicule selon les revendications 1, 2 ou 3, **caractérisé en ce que**, à l'état assemblé, la console de fixation (3) est disposée entre les languettes de fixation semi-circulaires (9, 10) des éléments compensateurs (5, 6) et les autres languettes de fixation intérieures prévues par tronçons (13, 14) font saillie dans des fentes (15, 16) de la console de fixation (3).

5. Véhicule selon une ou plusieurs des revendications précédentes, **caractérisé en ce que** la console de fixation (3) est disposée sur les montants (A et B) du véhicule par rapport aux éléments compensateurs (5, 6) en fonction de la position de fixation du tube de renforcement (1) de telle manière qu'un tube de renforcement (1) s'écartant d'un axe longitudinal (L0) peut être fixé au montant B de la carrosserie du véhicule par l'intermédiaire de la console de fixation (3) espacée des éléments compensateurs (5, 6) sur la distance (a).
